# EUROPEAN PATENT APPLICATION

(11) **EP 2 420 605 A1**
(43) Date of publication of application: **22.02.2012**
(21) Application number: 10764349.6
(22) Date of filing: 29.03.2010
(51) Int. Cl.: D06C 3/00, A61F 13/15, B29C 55/18

(54) **STRETCHING DEVICE, AND METHOD FOR STRETCHING SHEET**

(30) Priority: 13.04.2009 JP 2009097316
(71) Applicant: Uni-Charm Corporation, Ehime 799-0111 (JP)
(72) Inventor: AZUMA, Hideki, Kanonji-shi Kagawa 769-1602 (JP); MURAKAMI, Yasuo, Kanonji-shi Kagawa 769-1602 (JP)
(74) Representative: Eke, Philippa Dianne
(86) International application number: PCT/JP2010/055537
(87) International publication number: WO 2010/119764

(57) **Abstract**

A drawing apparatus to draw a sheet used to manufacture an absorbent article (A) includes a first protrusion group aligned in a form of rows along a drawing direction of the sheet; B) a second protrusion group aligned in the form of rows along the drawing direction and that meshes with the first protrusion group, (C) the sheet being drawn in the drawing direction by making the sheet be bitten in between the first protrusion group and the second protrusion group, D) wherein a space in which the sheet is bitten with the first protrusion group and the second protrusion group includes a first region, a second region adjacent to the first region in the drawing direction, and a third region adjacent to the second region at a side opposite to the first region in the drawing direction, E) wherein a drawing amount of the sheet in the case that the sheet is bitten with the first protrusion group and the second protrusion group in the second region is greater than the drawing amount in the first region and is smaller than the drawing amount in the third region.

## Description

### Technical Field

The present invention relates to drawing apparatuses and methods to draw a sheet. In particular the present invention relates to drawing apparatuses to draw a sheet to be used in manufacturing an absorbent article, and methods to draw the sheet.

### Background Art

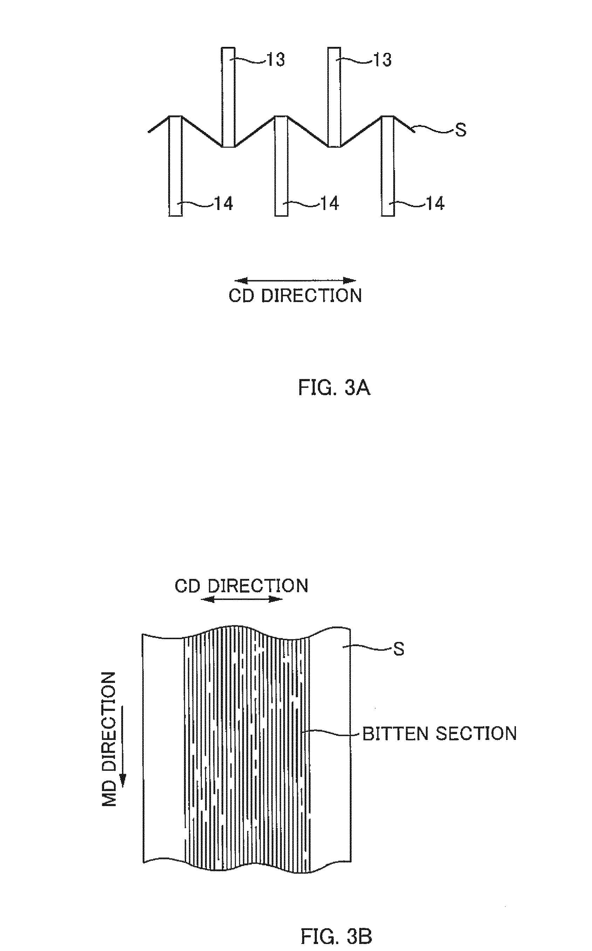

A drawing apparatus to draw a sheet to be used in manufacturing an absorbent article is already known, and the drawing apparatus includes a first protrusion group aligned in a form of rows along a drawing direction of the sheet, and a second protrusion group aligned in a form of rows along the drawing direction and that meshes with the first protrusion group. Under this configuration when the sheet is meshed in between the first protrusion group and the second protrusion group, of the sheet, a pull strength (tension) is applied to a section contacting a tip end of each protrusion, and therefore the sheet is drawn in the drawing direction (for example, refer to Fig. 3A).

By the way, of the two sections in the sheet adjacent to each other in the drawing direction, there can be considered making a drawing amount in one section larger than a drawing amount in another section (for example, refer to PTL 1). In other words, of the two regions adjacent to each other in the space in which the first protrusion group and the second protrusion group mesh the sheet, there is a case where the drawing amount of the sheet in one region becomes larger than the drawing amount in another region.

### Citation List

### Patent Literature

PTL1: Japanese Patent No.3516680

### SUMMARY

### Technical Problem

In the case where a section with a different drawing amount is included in the sheet however, the above pull strength changes in a boundary between the sections. When the drawing amount between the sections becomes very different, the pull strength in the boundary between the sections changes rapidly, and the rapid change of the pull strength induces poor drawing or a local breaking (tear) in the above boundary.

This invention was made in view of the above problems, and the object is, when including sections with different drawing amounts in the sheet, to prevent occurrence of poor drawing or local breaking in the boundary between the sections.

### Solution to Problem

An aspect of the invention to achieve the above advantages is a drawing apparatus to draw a sheet used to manufacture an absorbent article, the apparatus including:
a first protrusion group aligned in a form of rows along a drawing direction of the sheet;
a second protrusion group aligned in the form of rows along the drawing direction and that meshes with the first protrusion group, the sheet being drawn in the drawing direction by making the sheet be bitten in between the first protrusion group and the second protrusion group,
wherein a space in which the sheet is bitten with the first protrusion group and the second protrusion group includes a first region, a second region adjacent to the first region in the drawing direction, and a third region adjacent to the second region at a side opposite to the first region in the drawing direction,
wherein a drawing amount of the sheet in the case that the sheet is bitten with the first protrusion group and the second protrusion group in the second region is greater than the drawing amount in the first region and is smaller than the drawing amount in the third region.

Other aspects of this invention will become clear from the description in this specification and appended drawings.

### Advantageous Effects of Invention

In the case that sections with different drawing amounts in the sheet are included, if this invention is applied, the occurrence of poor drawing or local breaking in the boundary between the sections can be prevented.

### Brief Description of Drawings

Fig. 1 is an external view of a diaper 1 to be manufactured with a sheet S as a component element.
Fig. 2 is a view illustrating an embodiment mode of a drawing step.
Fig. 3A is a cross section view showing the sheet S meshed in between drawing pattern groups G13, G14. Fig. 3B is a view showing the sheet S that has been drawn.
Fig. 4 is a view showing a structural example of a drawing apparatus 10.
Fig. 5 is a view showing a pair of rotating rollers 11, 12 and the drawing pattern groups G13, G14 included on the peripheral surface thereof.
Fig. 6 is an enlarged view of a roller gap space Ar.
Fig. 7 is a view showing a relationship between a clearance P and a drawing amount.
Fig. 8 is an enlarged view of the roller gap space Ar according to a first modified example.
Fig. 9 is a view showing a relationship between an overlapping amount L and a drawing amount.
Fig. 10 is an enlarged view of the roller gap space Ar according to a second modified example.
Figs. 11A to 11C are views showing relationships between the shapes of the tip end portions in the first drawing pattern 13 and the drawing amounts.
Fig. 12 is a view showing an example in which the shape of the tip end portions in the first drawing pattern 13 positioned in a second region Ar2 are changed in stages.
Fig. 13 is a view showing another structural example of the drawing apparatus 10.

### Description of Embodiments

From the description in this specification and the attached drawings, at least the below matters will become clear.

First, this invention is a drawing apparatus to draw a sheet used to manufacture an absorbent article, the apparatus including:
a first protrusion group aligned in a form of rows along a drawing direction of the sheet;
a second protrusion group aligned in the form of rows along the drawing direction and that meshes with the first protrusion group, the sheet being drawn in the drawing direction by making the sheet be bitten in between the first protrusion group and the second protrusion group,
wherein a space in which the sheet is bitten with the first protrusion group and the second protrusion group includes a first region, a second region adjacent to the first region in the drawing direction, and a third region adjacent to the second region at a side opposite to the first region in the drawing direction,
wherein a drawing amount of the sheet in the case that the sheet is bitten with the first protrusion group and the second protrusion group in the second region is greater than the drawing amount in the first region and is smaller than the drawing amount in the third region.

With such a drawing apparatus, when both the section with a smaller drawing amount and a section with a greater drawing amount are included in the sheet, by including a section with an intermediate drawing amount in between these sections, the change in the pull strength on the sheet can be alleviated, and the occurrence of poor drawing or local breaking in the boundaries between the sections can be prevented.

Further, in the above drawing apparatus, in the case that the first protrusion group includes a plurality of first protrusions, and the second protrusion group includes a plurality of second protrusions, in the case one of the below three configurations is adopted, the drawing amount in the sheet in the second region can be certainly made greater than the drawing amount in the first region and can be certainly made smaller than the drawing amount in the third region.
(1) The first protrusions and the second protrusions are aligned alternately along the drawing direction in the space, wherein a gap between the first protrusions and the second protrusions in the second region is longer than the gap in the first region and is shorter than the gap in the third region.
(2) The first protrusions and the second protrusions are aligned alternately along the drawing direction in the space,
   wherein a direction in which the first protrusions protrude and a direction in which the second protrusions protrude are along an intersecting direction intersecting the drawing direction in the space,
   wherein tip end portions of the first protrusions and tip end portions of the second protrusions are overlapped along the intersecting direction in the space,
   wherein an overlapping amount of the tip end portions of the first protrusions and the tip end portions of the second protrusions in the second region is greater than the overlapping amount in the first region and is smaller than the overlapping amount in the third region.
(3) Tip end portions of the first protrusions positioned in the first region, and tip end portions of the first protrusions positioned in the second region, and tip end portions of the first protrusions positioned in the third region are shaped differently from each other,
wherein the shape of the tip end portions of the first protrusions positioned in the second region is a shape that adds a greater drawing amount than the shape of the tip end portions of the first protrusions positioned in the first region and is a shape that adds a smaller drawing amount than the shape of the tip end portions of the first protrusions positioned in the third region.

Further, in the above drawing apparatus,
wherein the sheet is continuous in a continuous direction, wherein a first rotating roller and a second rotating roller which rotate around an axis along the drawing direction while opposing the peripheral surfaces to each other are included,
wherein the first protrusions are included on a peripheral surface of the first rotating roller, the first protrusions being in a disk-like first drawing pattern that is continuous along a circumferential direction of the first rotating roller,
wherein the second protrusions are included on a circumferential surface of the second rotating roller, the second protrusions being in a disk-like second drawing pattern that is continuous along a circumferential direction of the second rotating roller,
wherein, of the first rotating roller and the second rotating roller, either one of the rotating rollers rotates while putting the sheet on the drawing pattern included on the peripheral surface of the either one of the rotating rollers, of the first drawing pattern and the second drawing pattern,
wherein, in accordance with a rotation of the either one of the rotating rollers, the sheet is passed through the space along the continuous direction.

With this configuration, by rotating the rotating roller around which the sheet has been put around, each portion of the sheet is subsequently placed in the space, and the sheet can be gradually drawn.

Further, in the above drawing apparatus,
wherein the sheet is made of a material having thermoplasticity, wherein a heating mechanism to heat the sheet is included,
wherein the sheet is drawn in the drawing direction by making the sheet that has been heated with the heating mechanism be bitten in between the first protrusion group and the second protrusion group.

With this configuration, occurrence of local breaking in the boundaries between the sections can be more effectively prevented. Further, in the above drawing apparatus,
Wherein, in the second region, the drawing amount in an end portion to a side adjacent to the first region in the drawing direction may be smaller than the drawing amount in an end portion to a side adjacent to the third region in the drawing direction.

With this configuration, the drawing amount of the sheet in the second region can be changed in stages, so that the change in the pull strength in between the first region and the third region can be more alleviated.

Further, a method of drawing a sheet used to manufacture an absorbent article, the method including:
preparing a first protrusion group aligned in a form of rows along a drawing direction of the sheet, and a second protrusion group aligned in the form of rows along the drawing direction and that meshes with the first protrusion group,
drawing the sheet in the drawing direction by making the sheet be bitten in between the first protrusion group and the second protrusion group,
wherein in the drawing, when including, in a space where the first protrusion group and the second protrusion group bite the sheet, a first region, a second region adjacent to the first region in the drawing direction, and a third region adjacent to the second region at a side opposite to the first region in the drawing direction,
a drawing amount of the sheet in the case that the first protrusion group and the second protrusion group bite the sheet in the second region is greater than the drawing amount in the first region and is smaller than the drawing amount in the third region.

With this method, in the case that the section with a smaller drawing amount and the section with a greater drawing amount are included in the sheet, occurrence of poor drawing or local breaking in the boundaries between the sections can be prevented.

### === Drawing Apparatus 10 of the Present Invention ===

A drawing apparatus of this invention (hereinafter, a drawing apparatus 10) draws a sheet S in a predetermined drawing direction with the sheet S to be used in the manufacture of absorbent articles such as diapers and sanitary napkins as an object. That is to say, a method of drawing the sheet S (hereinafter, a drawing method) is a method used in the manufacturing line of the absorbent article. Hereinafter, the sheet S, which is an object to be drawn and processed, and a drawing processing performed by the drawing apparatus 10 will be described respectively.

### «Sheet S»

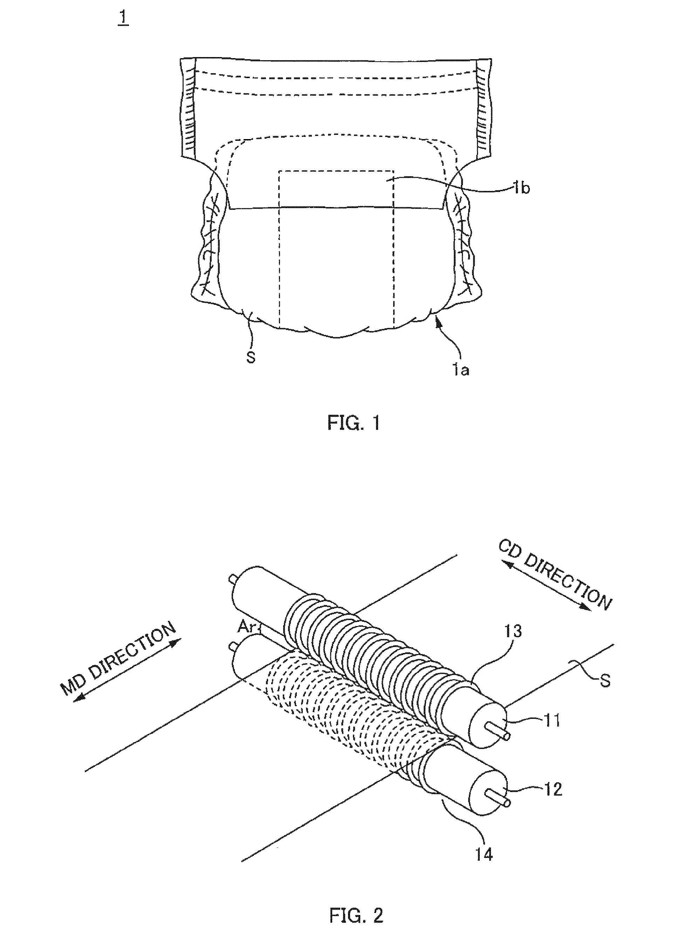

The sheet S is a material made of nonwoven fabric, a film sheet, or a composite sheet in which these are bonded together and, for example, used as a constituent element of the diaper 1 illustrated in Fig. 1. Fig. 1 is an external view of the diaper 1 to be manufactured with the sheet S as a configuration element. Specifically, the sheet S, which is an object to be processed by drawing, is combined with other materials constituting the diaper 1, and forms an exterior 1a of a section placed against the crotch of a wearer when the diaper 1 is worn. An absorbent body 1b that absorbs bodily fluid such as urine is secured on an inner surface (a surface on a side that comes into contact with the skin of the wearer) of the sheet S. Further, gathered sections (not shown) for preventing leakage of bodily fluid or excretion (a so-called side leakage) are formed at portions of the sheet S that are located on both sides of the absorbent body 1b.

The sheet S of the present embodiment is made of a thermoplastic material. Specifically, the sheet S made of nonwoven fabric may be, for example, produced by mixing thermoplastic fiber having extensibility (a property of extending in a non-elastic manner) and thermoplastic fiber having stretchability (a property of extending in an elastic manner) or produced solely by thermoplastic fiber having extensibility. The sheet S made of a film sheet may be, for example, produced by using a thermoplastic plastic film as a material. The sheet S made of a composite sheet of nonwoven fabric and a film sheet may be, for example, produced by bonding the nonwoven fabric and the film sheet, which have been described above as illustrative examples.

As will be described later, the sheet S before being processed by drawing is heated, and the sheet S is heated to an appropriate temperature (specifically, an appropriate temperature within a range of at or below the melting point of the constituent material of the sheet S). The purpose of heating the sheet S in this way is to cause the sheet S to exhibit its plasticity during the drawing process to facilitate the drawing of the sheet S and to prevent the sheet S from breaking during the drawing process.

It is to be noted that, on a production line of the diaper 1, the sheet S is fed in a continuous sheet (web) state in a continuous direction. In other words, on the production line of the diaper 1 of the present embodiment, the sheet S is transported along the continuous direction and towards a position where the drawing process is performed. Then, after the drawing process, the sheet S in the continuous state is bonded together with other materials and then cut into a shape of a product. Hereinafter, a direction in which the sheet S continues (i.e., a transport direction of the sheet S) is referred to as an MD-direction and a direction intersecting with the MD-direction (in other words, a direction in which a width direction of the sheet S faces) is referred to as a CD-direction.

### «Drawing Processing»

A drawing apparatus 10 of this embodiment causes the sheet S to be drawn in the CD-direction, i.e., the width direction of the sheet S. In other words, in the present embodiment, the CD-direction corresponds to a drawing direction. An embodiment mode of such drawing processing is performed is illustrated in Fig. 2. Fig. 2 is a diagram illustrating an embodiment of the drawing step.

As shown in Fig. 2, the drawing processing is performed while the sheet S is passing between a pair of rotating rollers 11, 12 each rotating about an axis extending along the CD-direction while opposing the peripheral surface to each other. In other words, a roller gap space Ar is formed in between the pair of rotating rollers 11, 12 (specifically, a section in which the peripheral surfaces of the rotating rollers 11, 12 come most closest in the circumferential direction of the rotating rollers 11, 12), and the sheet S passes through the roller gap space Ar along the MD direction.

Further, drawing patterns 13, 14 are provided on peripheral surfaces of the pair of rotating rollers 11, 12. The drawing patterns 13, 14 are protrusions each protruding in a radial direction of each rotating roller 11, 12 and are disk-like patterns continuing along a peripheral direction of each rotating roller 11, 12 in this embodiment. It is to be noted that each drawing pattern 13, 14 may form a disk-like shape as single piece (a single body) or form a disk-like shape as a combination of a plurality of segmented pieces. Hereafter, one rotating roller 11 is referred to as the first rotating roller 11, and the other rotating roller 12 is referred to as the second rotating roller 12.

The drawing pattern 13 included in the first rotating roller 11 corresponds to the first protrusions, and hereinafter is referred to as a first drawing pattern 13. The first drawing pattern 13 is aligned in the form of a plurality of rows along the CD direction (namely, the drawing direction), and configures the first drawing pattern group G13 (corresponds to the first protrusion group). The drawing pattern 14 included in the second rotating roller 12 corresponds to the second protrusions, and hereinafter is referred to as a second drawing pattern 14. The second drawing pattern 14 is aligned in the form of a plurality of rows along the CD direction, as similar to the first drawing pattern 13, and configures the second drawing pattern group G14 (corresponds to the second protrusion group).

In a roller gap space Ar, the first drawing pattern group G13 and the second drawing pattern group G14 mesh with each other. Thus, when passing through the above-mentioned roller gap space Ar, the sheet S is bitten between the drawing pattern groups G13, G14. A pull strength (a force that pulls the sheet S in the width direction) acts on the section that is in contact with the tip ends of the drawing patterns 13, 14 of the sheet S bitten between the drawing pattern groups G13, G14, and thus, as shown in Fig. 3A, the sheet S is deformed in a corrugated manner along its width direction and extended in the width direction. Fig. 3A is a cross-sectional view of the sheet S that is bitten between the drawing pattern groups G13, G14.

As the pull strength is released from the above-mentioned state, a portion of the sheet S bitten between the drawing pattern groups G13, G14 attempts to restore its original state, but becomes slack with pleats being formed due to some elongation in its width direction (as shown in Fig. 3B). In other words, the portion that is bitten between the drawing pattern groups G13, G14 will be extended in the CD-direction by an amount of slack. Note that, Fig. 3B is a diagram illustrating the extended sheet S.

As has been described above, the sheet S that is passing through the roller gap space Ar is bitten between the drawing pattern groups G13, G14 to draw the sheet S in the width direction. In other words, the roller gap space Ar corresponds to a space in which the drawing pattern groups G13, G14 that mesh with each other bite the sheet S. Each portion of the sheet S is drawn by subsequently passing through the roller gap space Ar in accordance with transporting of the sheet S.

By the way, the purpose of performing the drawing processing is to increase a planar size of the sheet S in the width direction to enlarge an effectively usable region in the sheet S. Also, a portion of the sheet S where the drawing processing has been applied (a portion bitten between the drawing pattern groups G13, G14) is provided with stretchability produced therein after the drawing processing and raised by a height of the pleats that have been formed. By making use of such a state, it is also possible to form the above-mentioned gathered section at a portion section where the drawing processing has been applied.

### « Structural Example of Drawing Apparatus 10 »

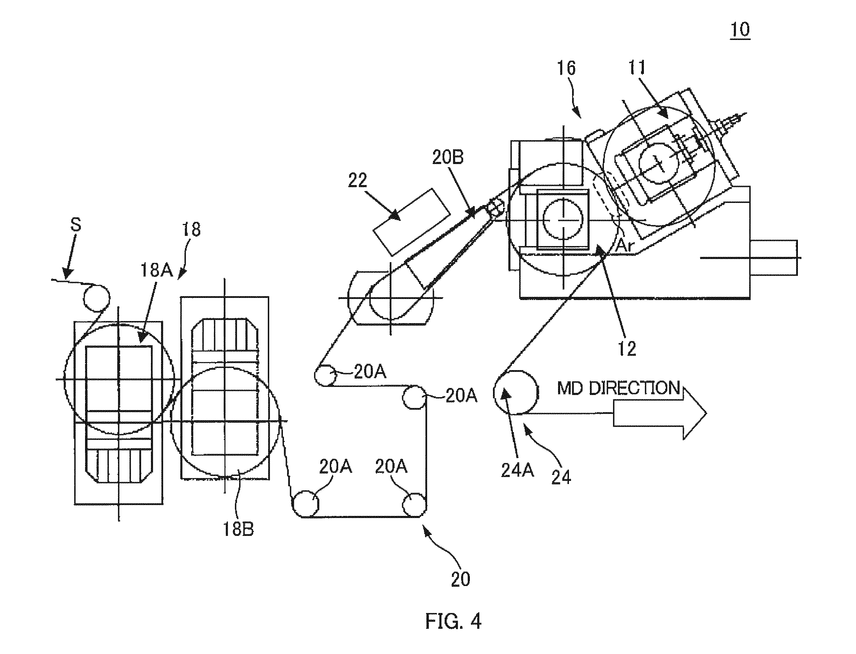

Next, a configuration illustrated in Fig. 4 as a structural example of the drawing apparatus 10 is described. Fig. 4 is a diagram showing a structural example of the drawing apparatus 10. The drawing apparatus 10 includes, as shown in Fig. 4, from an upstream side in a transporting direction (namely, an MD direction) of the sheet S, a primary heating unit 18, a sheet placing unit 20, a secondary heating unit 22, a drawing unit 16, and a sheet discharging unit 24.

The primary heating unit 18 is an example of a heating mechanism to heat the sheet S before the drawing processing, and has two heating drums 18A, 18B as illustrated in Fig. 4. The drum bodies of each of the heating drums 18A, 18B are heated by a heater not shown attached to an inner peripheral surface thereof. When the sheet S that has been transported in a continuous state is placed in the primary heating unit 18, the sheet S is placed around the outer peripheral surfaces of the drum bodies of the heating drums 18A, 18B and moves in the unit. Therefore, while the sheet S is being placed around the outer peripheral surface of the drum bodies of the heating drums 18A, 18B, the sheet S is moved in the MD direction and heated (warmed) with contact heat transfer. As described above, the heated sheet S is in a state in which it is easily drawn due to plasticity.

Note that, the number of the heating drums is not limited to two, and by appropriately adjusting in accordance to conditions such as manufacturing speed of the diaper 1, a more appropriate heating can be realized to make drawing of the sheet S easier.

The sheet placing unit 20 is a mechanism to subsequently feed out the heated sheet S toward the drawing unit 16, and as shown in Fig. 4, includes a plurality of transporting rollers 20A that rotate around an axis along the CD direction and a transporting conveyor 20B arranged immediately before the drawing unit 16. When each part of the sheet S exits the primary heating unit 18, it is put around the outer peripheral surface of each transporting roller A and then placed on a placement surface of the transporting conveyor 20B. Then, with the drive of the transporting conveyor 20B, the sheet S is guided to the roller gap space Ar.

The secondary heating unit 22 opposes the sheet S placed on the transporting conveyor 20B, is for heating the sheet S with such as radiant heat or warm air, and corresponds to an example of a heating mechanism. Heating with this secondary heating unit 22 is performed to complement heating with the primary heating unit 18 or to maintain the temperature of the sheet S. Thus, immediately before placing the sheet S in the drawing unit 16, the temperature of the sheet S can be certainly heated to a desired temperature. Note that, the configuration does not have to include the secondary heating unit 22.

The drawing unit 16 is a mechanism to form a main body of the drawing apparatus 10 and is to actually perform the above described drawing processing. Namely, in the processing that the drawing apparatus 10 performs, the drawing step by the drawing unit 16 is performed (in other words, the drawing method of this embodiment mode has a drawing step as a step to draw the sheet S in the CD direction).

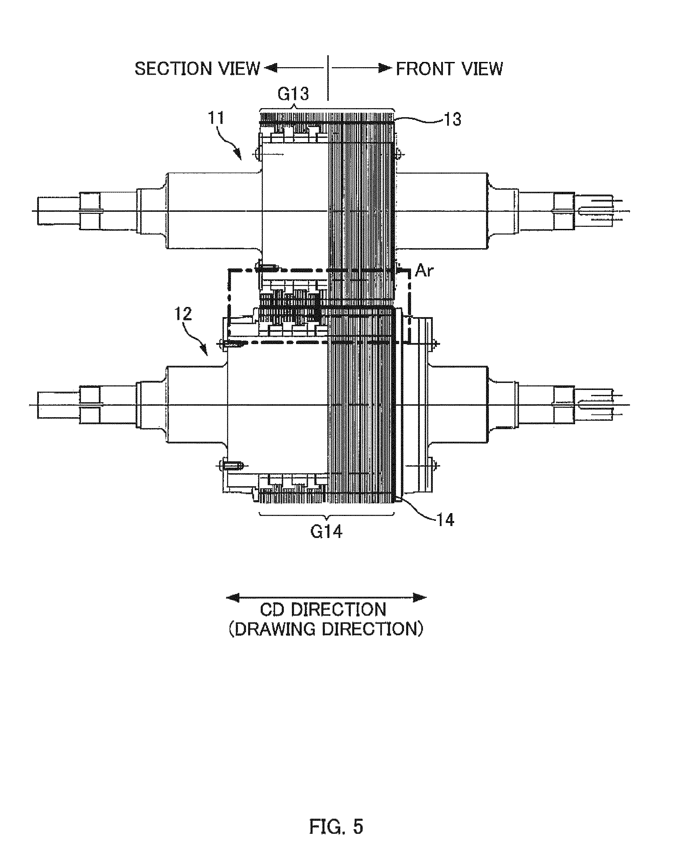

As shown in Fig. 5, the drawing unit 16 has as described above the pair of rotating rollers 11, 12, and the drawing pattern groups G13, G14 included on the peripheral surfaces thereof. Fig. 5 is a diagram showing the pair of rotating rollers 11, 12 and the drawing pattern groups G13, G14 included on the peripheral surfaces thereof, and the right side half is a front view, and the left side half is a cross section view.

Note that, each of the drawing pattern groups G13, G14 in accordance with this embodiment mode is separated from the roller main bodies of the rotating rollers 11, 12, and is attached to the roller main bodies in a detachable manner. Thus, processing and dimension adjustment of each of the drawing patterns 13, 14 can be performed easily and accurately, and also the drawing pattern groups G13, G14 can be exchanged independently at the time of maintenance of the apparatus. However, it is not limited to this, and an engraved area can be made in the roller main body of each of the rotating rollers 11, 12 and the drawing pattern groups G13, G14 may be directly fixed to the roller main body (fixed in an undetachable manner).

By meshing the sheet S guided to the roller gap space Ar by the transporting conveyor 20B in between the drawing pattern groups G13, G14, the sheet S is drawn in the CD direction (drawing direction). At this time, the sheet S is sufficiently heated by the two heating units 18, 22 at the upstream side. Namely, the drawing unit 16 meshes the sheet S heated with the heating units 18, 22 in between the drawing pattern groups G13, G14 and draws the sheet S.

Note that in this embodiment mode, when the sheet S is handed over from the transporting conveyor 20B and guided to the roller gap space Ar, of the pair of rotating rollers 11, 12 (that is, the first rotating roller 11 and the second rotating roller 12), either one of the rotating rollers puts the sheet S around the drawing pattern included on the peripheral surface of either one of the rotating rollers, of the first drawing pattern 13 and the second drawing pattern 14, and rotates. Then, with the rotation of the either one rotating roller, the sheet s passes through the roller gap space Ar along the MD direction (namely, a continuous direction).

Described specifically, in the structural example shown in Fig. 4, an axial core of the second rotating roller 12 is positioned to the transporting conveyor 20B side than an axial core of the first rotating roller 11, and the sheet S placed on the transporting conveyor 20B is to be handed over to the second rotating roller 12 (refer to Fig. 4). Therefore, the sheet S is put on the drawing pattern included on the peripheral surface of the second rotating roller 12 (namely, the second drawing pattern 14), and in accordance with the rotation of the second rotating roller 12, the sheet S is placed in the roller gap space Ar and passes trough the space Ar. Thus, each portion of the sheet S is placed subsequently in the roller gap space Ar, and as a result the sheet S is gradually drawn along the continuous direction.

Then, the part that has passed the roller gap space Ar in the sheet (namely, the part that has been performed with the drawing processing) is moved along the circumferential direction of the second rotating roller 12 in a state of being put on the second drawing pattern 12 for a while, and thereafter is discharged from the drawing unit 16 (comes out of the state of being put on the second drawing pattern 14).

The sheet discharging unit 24 is a mechanism to receive the sheet S that has come out of the drawing unit 16 by passing through the roller gap space Ar and feeding the sheet to the latter step. The sheet discharging unit 24 has a discharging roller 24A that rotates around an axis along the CD direction to a more downstream side than the drawing unit 16. With the discharging roller 24A putting the sheet S that has been drawing processed around the outer peripheral surface and rotating, the sheet S is fed out.

Note that, the structural example described above is merely one example of a configuration of the drawing apparatus 10, and it may be a partly different configuration (for example, the way of putting around the sheet S when putting the sheet S around the second drawing pattern 14) from the configuration illustrated in Fig. 4.

### === Drawing Method of this Embodiment ===

Next, the drawing method of this embodiment is described in detail. In this embodiment, the sheet S can be included with a section different in the drawing amount. Specifically, in the sheet S, of the two sections in which the position in respect to the drawing direction is different from each other, the drawing amount in one section can be made greater than the drawing amount in the other section. As a result, depending on the function to be shown by each section of the sheet S, an appropriate drawing amount can be added to each section. Note that, the drawing amount is a drawing amount of the sheet S that has been extended in the width direction by the drawing step, in other words, it is a degree of deformation (a degree of contortion) when the sheet S is deformed (contorted) due to the pull strength applied on the sheet S. The greater the drawing amount becomes, the greater the amount of slack formed in the section performed with the drawing processing becomes and the greater the stretchability added to the section becomes.

In this embodiment, in order to include the section with the different drawing amount in the sheet S, in the roller gap space Ar in which the first drawing pattern group G13 and the second drawing pattern group G14 mesh the sheet S, of the two regions that are different in position in the CD direction to each other, in one region the drawing amount of the sheet S in the case that the drawing pattern groups G13, G14 mesh the sheet S is made greater than the drawing amount in the other region. That is, the drawing apparatus 10 in this embodiment is configured so that there is formed a difference in the drawing amount in the roller gap space Ar.

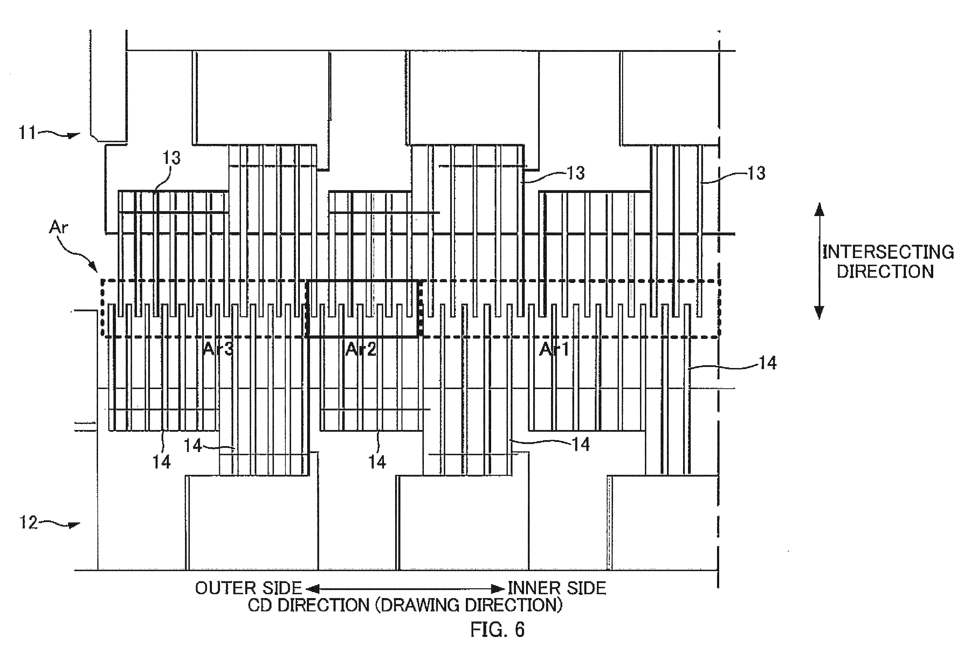

Here, the configuration in the roller gap space Ar is described. As shown in Fig. 6, in the roller gap space Ar, the first drawing pattern 13 and the second drawing pattern 14 are alternately aligned along the CD direction (drawing direction), and a clearance (corresponds to a gap, hereinafter referred to as clearance P) is formed in between the first drawing pattern 13 and the second drawing pattern 14 which are adjacent to each other. Fig. 6 is an enlarged view of the roller gap space Ar.

Further, as shown in Fig. 6, the direction in which the first drawing pattern 13 protrudes and the direction in which the second drawing pattern 14 protrudes is along an intersecting direction intersecting the CD direction in the roller gap space Ar. Here, the intersecting direction is a direction in which a thickness direction of the sheet S faces in the case that the sheet S passes through the roller gap space Ar (refer to Fig. 6). Further, the tip end portions of the first drawing pattern 13 and the tip end portions of the second drawing pattern 14 are overlapped along the above-described intersecting direction in the roller gap space Ar. Note that, the width of the first drawing pattern 13 (CD direction length) and the width of the second drawing pattern 14 are both uniformly aligned, and are also substantially equal for both the drawing patterns 13 and 14.

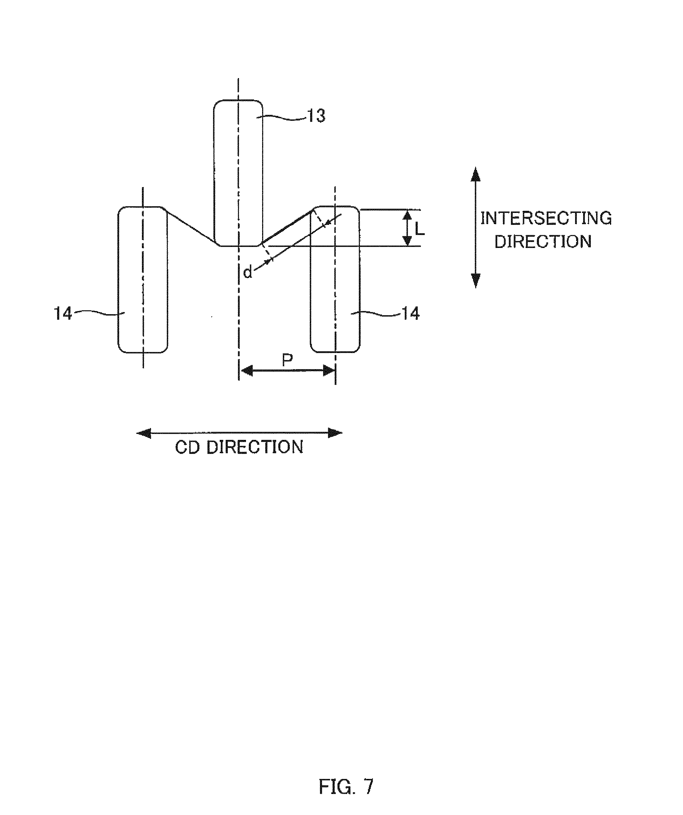

By the way, when the clearance P between the first drawing pattern 13 and the second drawing pattern 14 changes, the drawing amount in regards to a section that is put across the clearance P during the drawing processing, of the sheet S, changes. This is described while referring to Fig. 7. Fig. 7 is a diagram showing a relationship between the clearance P and the drawing amount.

The longer the clearance P becomes, the wider the gap between the first drawing pattern 13 and the second drawing pattern 14 that are adjacent to each other via the clearance P becomes, thus of the sheet S, the length of the part positioned in between the above two drawing patterns 13, 14 (a length shown by sign d in Fig. 7) becomes longer. That is, the length of the part targeted to be drawn becomes longer, and for the amount that the target part has become longer, the drawing amount added for the unit length in the CD direction becomes smaller. Further, in other words, the drawing magnification becomes smaller. Here, the drawing magnification refers to an enlargement ratio of the width in the drawing processing, in respect to the width of the sheet S before the drawing processing.

On the contrary, when the clearance P becomes short, the gap between the first drawing pattern 13 and the second drawing pattern 14 becomes narrower, so that the length d of the part positioned in between the above two drawing patterns 13, 14 becomes short. That is, the length of the targeted part to be drawn becomes short, and for the amount that the targeted part becomes short, the drawing amount added for the unit length in the CD direction becomes greater.

From the above, even when the other drawing conditions (for example, the overlapping amount L between the tip end portions of the first drawing pattern 13 and the tip end portions of the second drawing pattern 14) are the same, the shorter the clearance P becomes the greater the drawing amount becomes (on the contrary, the longer the clearance P becomes, the shorter the drawing amount becomes).

By using the above characteristics, in this embodiment, in order to include a section with a different drawing amount in the sheet S, regions with a different clearance P to each other is included in the roller gap space Ar. Described specifically, as shown in Fig. 6, three regions Ar1, Ar2, Ar3 with different clearances P to each other are included. In other words, in the drawing step with the drawing unit 16, three regions Ar1, Ar2, Ar3 are included in the roller gap space Ar. Hereinafter, the three regions Ar1, Ar2, Ar3 are each referred to as a first region Ar1, a second region Ar2, and a third region Ar3.

The first region Ar1 is one region in the roller gap space Ar that has been divided into three. The second region Ar2 is a region that is adjacent to the first region Ar1 in the CD direction. The third region Ar3 is a region adjacent to the second region Ar2 at an opposite side to the first region Ar1 in the CD direction. Note that, in this embodiment, looking from the second region Ar2, the first region Ar1 is positioned to the inner side in the CD direction, and the third region Ar3 is positioned to the outer side in the CD direction, but on the other hand, the first region Ar1 may be positioned to the outer side in the CD direction, and the third region Ar3 may be positioned to the inner side in the CD direction.

Further, the clearance P in the first region Ar1 is made somewhat longer (wider) than the clearance P in the third region Ar3 (refer to Fig. 6). That is, the drawing amount of the sheet S in the case the first drawing pattern group G13 and the second drawing pattern group G14 meshes the sheet S in the first region Ar1, is somewhat smaller than the drawing amount in the third region Ar3.

Then, in this embodiment, the second region Ar2 is arranged in between the first region Ar1 and the third region Ar3, and the clearance P in the region Ar2 is made shorter than the first region Ar1 and is made longer than the clearance P in the third region Ar3 (refer to Fig. 6). That is, the drawing amount of the sheet S when the first drawing pattern group G13 and the second drawing pattern group G14 meshes the sheet S in the second region Ar1, is somewhat greater than the drawing amount in the first region Ar1 and smaller than the drawing amount in the third region Ar3.

As described above, in this embodiment, in between the first region Ar1 and the third region Ar3 is arranged the second region Ar2 in which the drawing amount in between both regions is added to the sheet S. Thus, in the case where the drawing amount is to be made different between the sections different in positions (positions in the CD direction) to each other in the sheet S, rapid change of the pull strength in the boundaries between the sections is prevented, and occurrence of poor drawing or local breaking (tear) in the boundaries due to the rapid change of the pull strength can be prevented. The above effects are described in detailed in the paragraph regarding effectiveness of this embodiment.

Further, in this embodiment, of the second region Ar2, the clearance P in the end portion (inner side end portion) to the side adjacent to the first region Ar1 in the CD direction is made longer than the clearance P in the end portion (outer side end portion) to the side adjacent to the third region Ar3 in the CD direction. In other words, the drawing amount of the sheet S in the inner side end portion of the second region Ar2 is made smaller than the drawing amount in the outer side end portion. Described specifically, the drawing amount (in other words, clearance P) of the sheet S in the second region Ar2 is made gradually greater from the inner side end portion toward the outer side end portion.

### === Effectiveness of this Embodiment ===

With the drawing apparatus 10 and the drawing method in this embodiment, in the case of including the sections with different drawing amounts in the sheet S, occurrence of poor drawing or local breaking in the boundaries between the sections can be prevented. Hereinafter, the effectiveness of this embodiment is described.

As described in the paragraph regarding the Technical Problem, in the sheet S, of the two sections that are adjacent to each other in the width direction, when making the drawing amount in the sheet S in one section different from the drawing amount in the other section, the pull strength applied to the sheet S changes in the boundaries between the sections. Here, in the case that the drawing amount between the sections are largely different (for example, in the case where the above described first region Ar1 and the third region Ar3 are adjacent), the change in the pull strength in the boundaries between the sections changes rapidly. In such a situation, stress load concentrates in the boundary positions between the sections, so that in the boundaries between the sections, poor drawing or local breaking (tear) such as opening of a hole due to poor meshing between the drawing patterns 13, 14 occurs.

In this embodiment, when including both the section with a smaller drawing amount and the section with a greater drawing amount to the sheet S, the section with an intermediate drawing amount is included in between. That is, in the roller gap space Ar, in between the first region Ar1 and the third region Ar3 in which the drawing amount is different from each other, the second region Ar2 in which an intermediate drawing amount is added to the sheet S is arranged. Thus, the change in the pull strength in between the first region Ar1 and the third region Ar3 is alleviated, as a result, in the case the sections with different drawing amounts in the sheet S are included, the occurrence of poor drawing or local breaking in the boundaries between the sections can be prevented.

Note that, in this embodiment, in order to make the drawing amount in the sheet S in the second region Ar2 greater than the drawing amount in the first region Ar1, and smaller than the drawing amount in the third region Ar3, the clearance P in the second region Ar2 is made shorter than the clearance P in the first region Ar1 and longer than the clearance P in the third region Ar3. Thus, a relationship in size in the drawing amount between the above described regions Ar1, Ar2, Ar3 can be certainly achieved.

Further, in this embodiment, as described above, the drawing amount in the end portion to the side adjacent to the first region Ar1 in the CD direction, of the second region Ar2, is made smaller than the drawing amount in the end portion to the side adjacent to the third region Ar3. By making the drawing amount gradually change in the second region Ar2 in this way, the change of the pull strength in between the first region Ar1 and the third region Ar3 can be alleviated more. It is not limited to this however, and the drawing amount of the sheet S in the second region Ar2 may be made uniform.

Further, in this embodiment, a drawing processing is to be performed to the sheet S that has been heated by the heating units 18, 22. That is, the sheet S is drawn after it is made to be a state in which the sheet S is easily drawn (easy to be drawn out), so that occurrence of local breaking in the boundaries between the sections can be more effectively prevented.

### === Other Drawing Methods ===

The above described drawing method (hereinafter, this example) is merely one example, and other methods are conceivable. Hereinafter, a first modified example and a second modified example as other drawing methods are described.

### «First Modified Example»

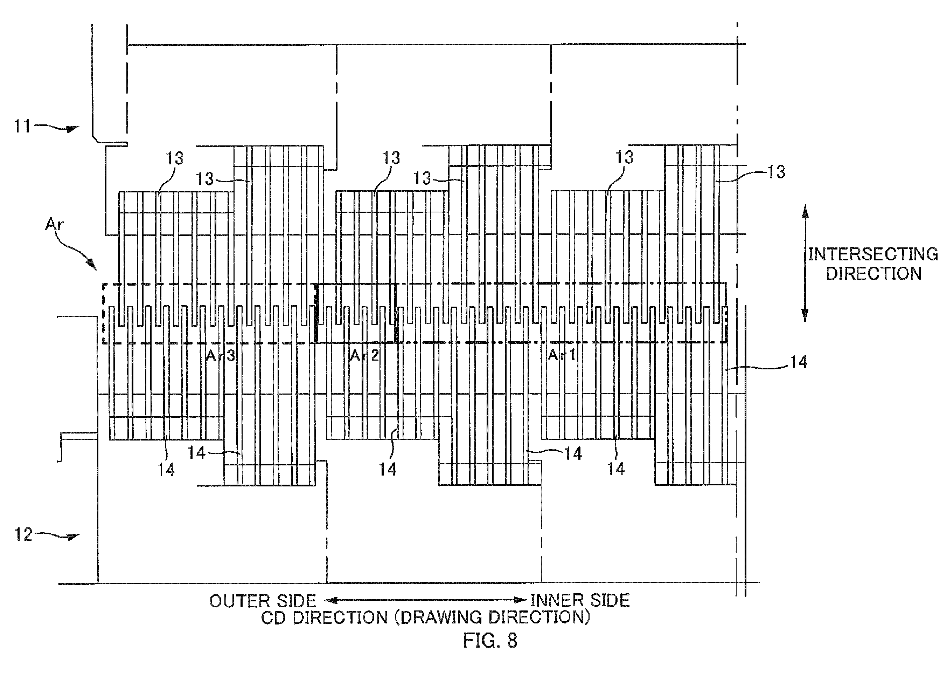

In the first modified example, in order to include sections with different drawing amounts in the sheet S, as shown in Fig. 8, in between each of the regions Ar1, Ar2, Ar3 in the roller gap space Ar, the overlapping amount of the tip end portions of the drawing patterns 13, 14 with each other are different from each other. Fig. 8 is an enlarged view of the roller gap space Ar of the first modified example.

Described specifically, in the roller gap space Ar, the tip end portions of the first drawing pattern 13 and the tip end portions of the second drawing pattern 14 are somewhat overlapped in the above-described intersecting direction. When the overlapping amount of the tip end portions of the drawing patterns 13, 14 with each other (hereinafter, overlapping amount L) changes, the drawing amount of the part positioned between the above tip end portions, in the sheet S, changes. Here, the overlapping amount refers to the length in the intersecting direction of the part in which the tip end portions of the drawing patterns 13, 14 are overlapped with each other, in other words, it corresponds to a push-in amount when the first drawing pattern 13 pushes in the sheet S in the intersecting direction toward the peripheral surface of the second rotating roller 12 (or, when the second drawing pattern 14 pushes in the sheet S toward the peripheral surface of the first rotating roller 11).

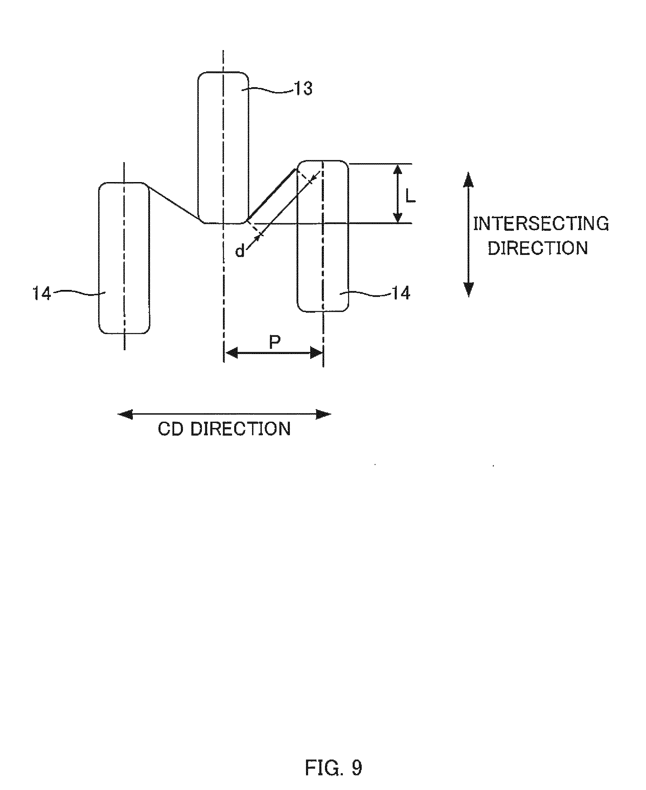

Hereinafter, by referring to Fig. 9, the relationship between the overlapping amount L and the drawing amount is described. Fig. 9 is a diagram showing the relationship between the overlapping amount L and the drawing amount. The greater the overlapping amount L becomes, the longer the length (the length shown by sign d in Fig. 9) of the part positioned in between the tip end portions of the drawing patterns 13, 14 overlapped with the above overlapping amount L becomes. That is, the amount drawn by the above drawing patterns 13, 14 becomes longer. As a result, even if the other drawing condition (for example, clearance P) is the same, the greater the overlapping amount L becomes, the greater the drawing amount becomes (on the other hand, the smaller the overlapping amount L becomes, the smaller the drawing amount becomes). Note that, in the first modified example, looking from the second region Ar2, the first region Ar1 is positioned to the inner side in the CD direction, and the third region Ar3 is positioned to the outer side in the CD direction (refer to Fig. 8).

By using the above characteristics, in the first modified example, the overlapping amount L in the first region Ar1 is made somewhat smaller than the overlapping amount L in the third region Ar3 (refer to Fig. 8). In the first modified example, the overlapping amount L in the second region Ar2 is made greater than the overlapping amount L in the first region Ar1 and smaller than the overlapping amount L in the third region Ar3.

Further, preferably, the overlapping amount L in the second region Ar2 gradually becomes greater from the end portion to the side adjacent to the first region Ar 1 in the CD direction toward the tip end to the side adjacent to the third region Ar3. This is because the change in pull strength in between the first region Ar1 and the third region Ar3 can be alleviated more. Note that, in order to change the overlapping amount L, of the first drawing pattern 13 and the second drawing pattern 13, the outer diameter (protruding amount) of at least one drawing pattern may be changed.

### «Second Modified Example»

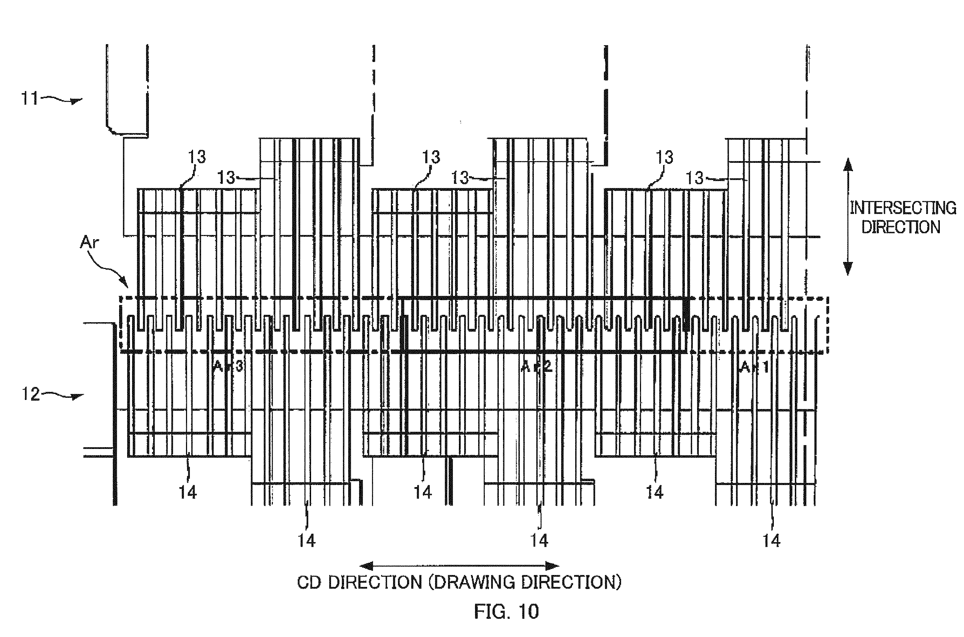

In the second modified example, to include sections with different drawing amounts in the sheet S, as shown in Fig. 10, in between each of the regions Ar1, Ar2, Ar3 in the roller gap space Ar, the shape of the tip end portions of the first drawing pattern 13 are made different from each other. Fig. 10 is an enlarged view of the roller gap space Ar of the second modified example.

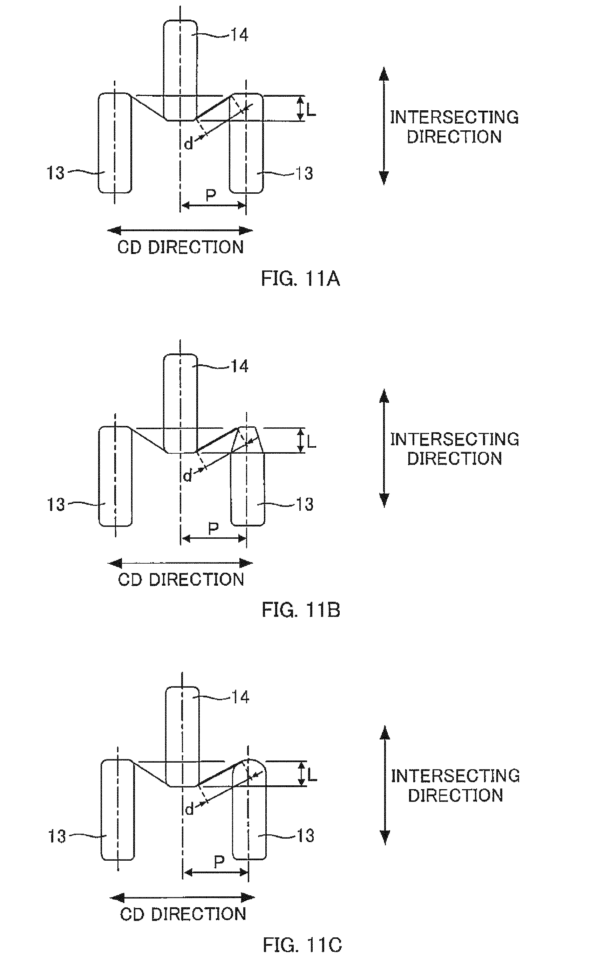

When the shape of the tip end portions of the first drawing pattern 13 changes, the drawing amount of the sheet S drawn by the first drawing pattern 13 changes. Hereinafter, referring to Fig. 11A to Fig. 11C, the relationship between the shape of the tip end portions and the drawing amount is described. Figs. 11A to 11C each show the relationship between the shapes of the tip end portions and the drawing amount.

When the tip end portion of the first drawing pattern 13 changes, the length of the part put across the first drawing pattern 13 and the adjacent second drawing pattern 14 (the length shown by the sign d in Figs. 11A to 11C) changes, and in accordance with this the drawing amount changes. In other words, even if the other drawing conditions (for example, the clearance P and the overlapping amount L) are the same, depending on the shape of the tip end portion of the first drawing pattern 13, the drawing amount to be added to the sheet S changes. The drawing amount to be added to the sheet S becomes smaller generally in order of the shape of a substantially rectangular parallelepiped with a somewhat roundness in the corner portions (the shape shown in Fig. 11A), the shape pointed in a tapered shape (the shape shown in Fig. 11B), and the shape (the shape shown in Fig. 11C) in which the tip end is in a substantially arc shape (or substantially round shape).

By using the above characteristics, in the second modified example, the shape of the tip end portions of the first drawing pattern 13 positioned in the first region Ar1 is made as a shape that adds a small drawing amount than the shape of the tip end portions of the first drawing pattern 13 positioned in the third region Ar3 (refer to Fig. 10). Specifically, the shape of the tip end portions of the first drawing pattern 13 positioned in the first region Ar1 are made in the shape illustrated in Fig. 11C, and the shape of the tip end portions of the first drawing pattern 13 positioned in the third region Ar3 is made as the shape illustrated in Fig. 11A. In the second modified example, the shape of the tip end portions of the first drawing pattern 13 positioned in the second region Ar2 is made as the shape that adds a greater drawing amount than the shape of the tip end portions of the first drawing pattern 13 positioned in the first region Ar1, and is made as the shape that adds a smaller drawing amount than the shape of the tip end portions of the first drawing pattern 13 positioned in the third region Ar3.

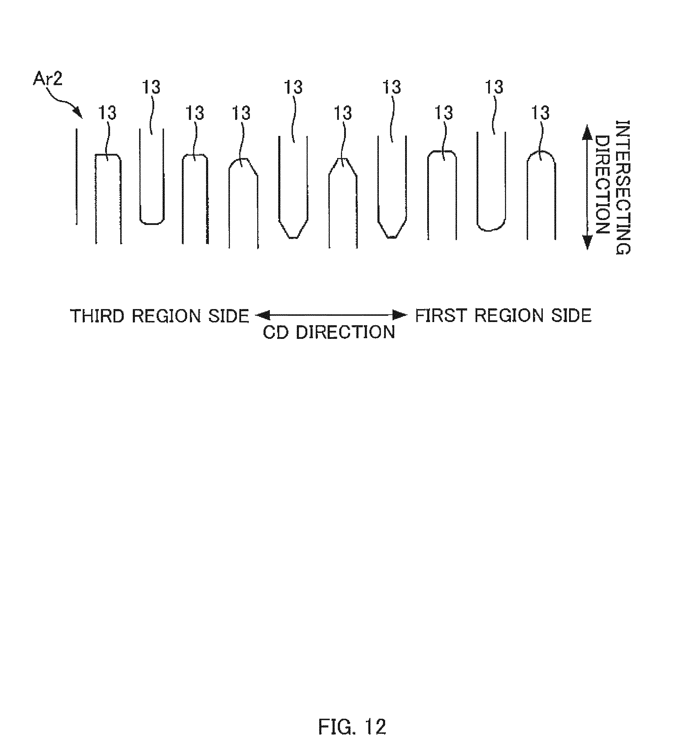

Regarding the shape of the tip end portions of the first drawing pattern 13 positioned in the second region Ar2, preferably the drawing amount to be gradually added to the sheet S changes to be greater from the end portion to the side adjacent to the first region Ar1 in the CD direction toward the end portion to the side adjacent to the third region Ar3. This is so that the change in pull strength in between the first region Ar1 and the third region Ar3 can be alleviated more. As one example of the configuration, the example illustrated in Fig. 12 can be considered. Fig. 12 is a diagram showing an example in which the shape of the tip end portions of the first drawing pattern 13 positioned in the second region Ar2 have been gradually changed.

Note that, from the above points of view, when designing the shape of the tip end portions of the first drawing pattern 13 positioned in each region Ar1, Ar2, Ar3, in the case that an appropriate shape is selected, it becomes possible to cause the sheet S to slide in the case that the sheet S passes through the roller gap space Ar. With such sliding of the sheet S, a smooth drawing processing is achieved, and thus occurrence of poor drawing can be more effectively suppressed. As a method to cause the slide of the sheet S, other than appropriately selecting the shape of the tip end portions of each first drawing pattern 13, there can be considered completing the surface state of the tip end portions to appropriate states (for example, performing surface processing).

Further, in addition to changing the shape of the tip end portions of the first drawing pattern 13 in between each of the regions Ar1, Ar2, Ar3, the shapes of the tip end portions of the second drawing pattern 14 may be changed in between each of the regions Ar1, Ar2, Ar3.

### «Effect of each Modified Example»

The first modified example and the second modified example described above each differ in the configuration to change the drawing amount, but in other parts have a similar configuration to this example, and have the same effect as this example. Namely, in each of the configuration in which the clearance P is changed in each region Ar1, Ar2, Ar3 of the roller gap space Ar, the configuration in which the overlapping amount L is changed, and the configuration in which the shape of the tip end portions of the first drawing pattern 13 is changed, the drawing amount of the sheet S in the second region Ar2 can be made greater than the drawing amount in the first region Ar1 and smaller than the drawing amount in the third region Ar3. In other words, of this example, the first modified example, and the second modified example, if either one configuration is applied, the relationship in size of the drawing amount between the regions Ar1, Ar2, Ar3 described above can be certainly achieved.

Further, the configuration can be such that each configuration of this example, the first modified example, and the second modified example are combined. With the configuration having such a combination, a variation in methods to change the drawing amount increases, so that the drawing conditions that may change depending on such as the material of the sheet S can be appropriately handled.

### ===Other Embodiments===

In the above embodiment the drawing apparatus 10 and the drawing method of this invention are mainly described, but the embodiment is to facilitate understanding of this invention, and does not limit this invention in any way. It is needless to say that this invention may be changed and modified within the scope of the invention, and equivalents thereof are also included. Further, the above described set value, size value, shape, and the like are merely examples to obtain the effects of this invention, and do not limit the invention in any way.

Note that, in this embodiment, the first rotating roller 11 and the second rotating roller 12 are concepts used differentiate the pair of rotating rollers 11, 12 for the sake of convenience, and either of the rotating rollers may be referred to as the first rotating roller 11. Therefore, the first drawing pattern 13 is the drawing pattern included on the peripheral surface of the rotating roller set as the first rotating roller 11, of the pair of rotating rollers 11, 12.

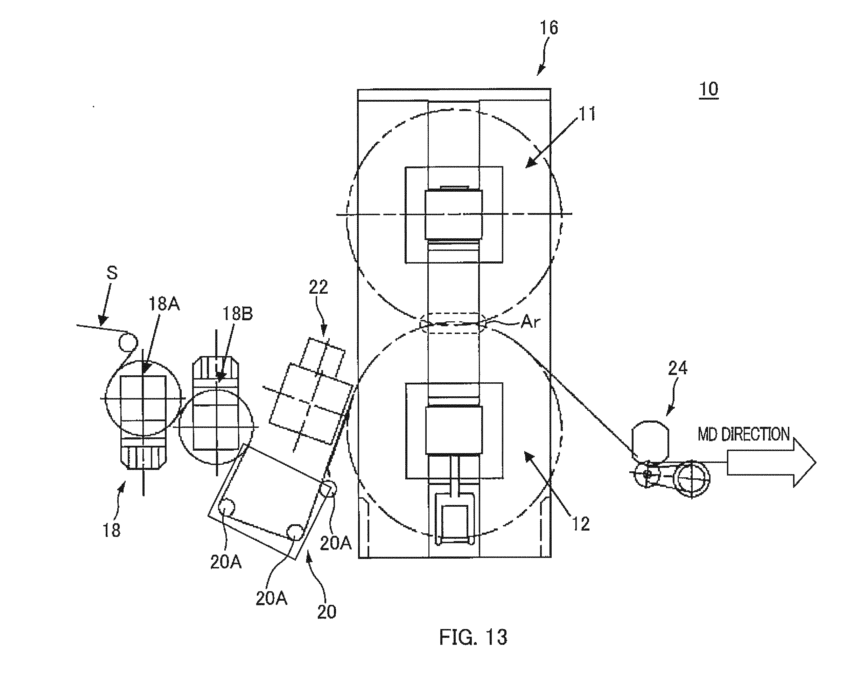

Note that, the configuration example of the drawing apparatus 10 is not limited to that illustrated in the above embodiment (the configuration example illustrated in Fig. 4), and for example may be the configuration example illustrated in Fig. 13. Fig. 13 is a diagram showing other configuration examples of the drawing apparatus 10. In the configuration example illustrated in Fig. 13, compared to the configuration example illustrated in Fig. 4, the outer diameters of the rotating rollers 11, 12 included in the drawing unit 16 is made somewhat larger. As a result, in the configuration example illustrated in Fig. 13, the processing speed (amount of the sheet S that can be performed with the drawing processing per unit time) can be made faster.

Further, in the above embodiment, of the pair of rotating rollers 11, 12, either one of the rotating rollers is made to rotate while putting the sheet S on the drawing pattern included on the peripheral surface of either one of the rotating rollers. Namely, in the above description, the sheet S is passed through the roller gap space Ar while being put around the drawing pattern. It is not limited to this however, and the sheet may be moved straight toward the roller gap space Ar without being put around the drawing pattern, and may be placed on the drawing pattern only in the case that it passes the space Ar.

Further, in this embodiment, the drawing processing is performed to the sheet S made of a material having thermoplasticity, but this invention is applicable even when performing drawing processing to the sheet S made of a material that is non-thermoplastic.

Further, in this embodiment, the first protrusion group and the second protrusion group that mesh with each other are the first drawing pattern group G13 and the second drawing pattern group G14 configured from the disk-like first drawing pattern 13 and the second drawing pattern 14. However, the first protrusion group and the second protrusion group may be in any shape, as long as they draw the sheet S in the drawing direction by meshing the sheet S, and for example, may be the first protrusion group and the second protrusion group configured by a plurality of protruding protrusions.

### Reference Signs List

1 diaper (absorbent article), 1a exterior, 1b absorbent body, 10 drawing apparatus, 11 first rotating roller, 12 second rotating roller, 13 first drawing pattern (first protrusions), 14 second drawing pattern (second protrusions), 16 drawing unit, 18 primary heating unit (heating mechanism), 18A, 18B heating drum, 20 sheet placing unit, 20A transporting roller, 20B transporting conveyor, 22 secondary heating unit (heating mechanism), 24 sheet discharge unit, 24A discharge roller, Ar roller gap space (space), Ar1 first region, Ar2 second region, Ar3 third region, G13 first drawing pattern group (first protrusion group), G14 second drawing pattern group (second protrusion group), S sheet

## Claims

1. A drawing apparatus to draw a sheet used to manufacture an absorbent article, the apparatus comprising:
a first protrusion group aligned in a form of rows along a drawing direction of the sheet;
a second protrusion group aligned in the form of rows along the drawing direction and that meshes with the first protrusion group, the sheet being drawn in the drawing direction by making the sheet be bitten in between the first protrusion group and the second protrusion group,
wherein a space in which the sheet is bitten with the first protrusion group and the second protrusion group includes a first region, a second region adjacent to the first region in the drawing direction, and a third region adjacent to the second region at a side opposite to the first region in the drawing direction,
wherein a drawing amount of the sheet in the case that the sheet is bitten with the first protrusion group and the second protrusion group in the second region is greater than the drawing amount in the first region and is smaller than the drawing amount in the third region.

2. A drawing apparatus according to claim 1,
wherein the first protrusion group includes a plurality of first protrusions,
wherein the second protrusion group includes a plurality of second protrusions,
wherein the first protrusions and the second protrusions are aligned alternately along the drawing direction in the space,
wherein a gap between the first protrusions and the second protrusions in the second region is longer than the gap in the first region and is shorter than the gap in the third region.

3. A drawing apparatus according to claim 1,
wherein the first protrusion group includes a plurality of first protrusions,
wherein the second protrusion group includes a plurality of second protrusions,
wherein the first protrusions and the second protrusions are aligned alternately along the drawing direction in the space,
wherein a direction in which the first protrusions protrude and a direction in which the second protrusions protrude are along an intersecting direction intersecting the drawing direction in the space,
wherein tip end portions of the first protrusions and tip end portions of the second protrusions are overlapped along the intersecting direction in the space,
wherein an overlapping amount of the tip end portions of the first protrusions and the tip end portions of the second protrusions in the second region is greater than the overlapping amount in the first region and is smaller than the overlapping amount in the third region.

4. A drawing apparatus according to claim 1,
wherein the first protrusion group includes a plurality of first protrusions,
wherein the second protrusion group includes a plurality of second protrusions,
wherein tip end portions of the first protrusions positioned in the first region, and tip end portions of the first protrusions positioned in the second region, and tip end portions of the first protrusions positioned in the third region are shaped differently from each other,
wherein the shape of the tip end portions of the first protrusions positioned in the second region is a shape that adds a greater drawing amount than the shape of the tip end portions of the first protrusions positioned in the first region and is a shape that adds a smaller drawing amount than the shape of the tip end portions of the first protrusions positioned in the third region.

5. A drawing apparatus according to any one of claims 2 to 4,
wherein the sheet is continuous in a continuous direction,
wherein a first rotating roller and a second rotating roller which rotate around an axis along the drawing direction while opposing the peripheral surfaces to each other are included,
wherein the first protrusions are included on a peripheral surface of the first rotating roller, the first protrusions being in a disk-like first drawing pattern that is continuous along a circumferential direction of the first rotating roller,
wherein the second protrusions are included on a circumferential surface of the second rotating roller, the second protrusions being in a disk-like second drawing pattern that is continuous along a circumferential direction of the second rotating roller,
wherein, of the first rotating roller and the second rotating roller, either one of the rotating rollers rotates while putting the sheet on the drawing pattern included on the peripheral surface of the either one of the rotating rollers, of the first drawing pattern and the second drawing pattern,
wherein, in accordance with a rotation of the either one of the rotating rollers, the sheet is passed through the space along the continuous direction.

6. A drawing apparatus according to any one of claims 1 to 5,
wherein the sheet is made of a material having thermoplasticity,
wherein a heating mechanism to heat the sheet is included,
wherein the sheet is drawn in the drawing direction by making the sheet that has been heated with the heating mechanism be bitten in between the first protrusion group and the second protrusion group.

7. A drawing apparatus according to any one of claims 1 to 6,
Wherein, in the second region, the drawing amount in an end portion to a side adjacent to the first region in the drawing direction is smaller than the drawing amount in an end portion to a side adjacent to the third region in the drawing direction.

8. A method of drawing a sheet used to manufacture an absorbent article, the method comprising:
preparing a first protrusion group aligned in a form of rows along a drawing direction of the sheet, and a second protrusion group aligned in the form of rows along the drawing direction and that meshes with the first protrusion group,
drawing the sheet in the drawing direction by making the sheet be bitten in between the first protrusion group and the second protrusion group,
wherein in the drawing, when including, in a space where the first protrusion group and the second protrusion group bite the sheet, a first region, a second region adjacent to the first region in the drawing direction, and a third region adjacent to the second region at a side opposite to the first region in the drawing direction,
a drawing amount of the sheet in the case that the first protrusion group and the second protrusion group bite the sheet in the second region is greater than the drawing amount in the first region and is smaller than the drawing amount in the third region.
